(19) **Europäisches Patentamt**

**European Patent Office**

**Office européen des brevets**

(11) **EP 0 880 109 B1**

(12) **EUROPÄISCHE PATENTSCHRIFT**

(45) Veröffentlichungstag und Bekanntmachung des Hinweises auf die Patenterteilung:
**29.06.2005 Patentblatt 2005/26**

(51) Int Cl.$^7$: **G06T 11/00**, G06T 7/00

(21) Anmeldenummer: **98300738.6**

(22) Anmeldetag: **02.02.1998**

(54) **Verfahren zur Ermittlung der Transformation zwischen einem Objekt und seiner dreidimensionalen Darstellung und Anordnung zur Durchführung des Verfahrens**

Method for determining the transformation between an object and its three dimensional representation and device for carrying out this method

Procédé pour déterminer la transformation entre un objet et sa représentation tridimensionnelle et dispositif pour la mise en oeuvre du procédé

(84) Benannte Vertragsstaaten:
**DE FR GB NL**

(30) Priorität: **14.02.1997 DE 19705600**

(43) Veröffentlichungstag der Anmeldung:
**25.11.1998 Patentblatt 1998/48**

(73) Patentinhaber:
- **Philips Intellectual Property & Standards GmbH 20099 Hamburg (DE)**
  Benannte Vertragsstaaten:
  **DE**
- **Koninklijke Philips Electronics N.V. 5621 BA Eindhoven (NL)**
  Benannte Vertragsstaaten:
  **FR GB NL**

(72) Erfinder:
- **Weese, Jürgen, Dr.**
  **Röntgenstrasse 24, 22335 Hamburg (DE)**
- **Buzug, Thorsten, Dr.**
  **Röntgenstrasse 24, 22335 Hamburg (DE)**
- **Penney, Graeme P.**
  **Röntgenstrasse 24, 22335 Hamburg (DE)**
- **Hawkes, David J.**
  **Röntgenstrasse 24, 22335 Hamburg (DE)**

(74) Vertreter: **Volmer, Georg, Dipl.-Ing. et al Philips Intellectual Property & Standards GmbH, Postfach 50 04 42 52088 Aachen (DE)**

(56) Entgegenhaltungen:
EP-A- 0 573 345  US-A- 4 791 934
US-A- 5 531 520

- LEMIEUX L ET AL: "VOXEL-BASED LOCALIZATION IN FRAME-BASED AND FRAMELESS STEREOTAXY AND ITS ACCURACY" MEDICAL PHYSICS,US,AMERICAN INSTITUTE OF PHYSICS. NEW YORK, Bd. 21, Nr. 8, 1. August 1994 (1994-08-01), Seiten 1301-1310, XP000466011 ISSN: 0094-2405
- MAURER C R ET AL: "REGISTRATION OF 3-D IMAGES USING WEIGHTED GEOMETRICAL FEATURES" IEEE TRANSACTIONS ON MEDICAL IMAGING,US,IEEE INC. NEW YORK, Bd. 15, Nr. 6, 1. Dezember 1996 (1996-12-01), Seiten 836-849, XP000640722 ISSN: 0278-0062
- DAVIS L S: "A SURVEY OF EDGE DETECTION TECHNIQUES" COMPUTER GRAPHICS AND IMAGE PROCESSING,US,ACADEMIC PRESS. NEW YORK, Bd. 4, Nr. 3, 1. September 1975 (1975-09-01), Seiten 248-270, XP002037399

## Beschreibung

Die Erfindung bezieht sich auf ein Verfahren zur Ermittlung der räumlichen Transformation zwischen einem Objekt und einer aus einem Datensatz ableitbaren dreidimensionalen Darstellung des Objektes mit folgenden Schritten:

a) Erzeugung einer Röntgenaufnahme von dem in einem Untersuchungsbereich befindlichen Objekt,
b) Ableitung eines Pseudo-Projektionsbildes, das eine mit definierten Projektionsparametern erzeugte Projektion des Objektes auf einen zweidimensionalen Bereich darstellt, aus dem Datensatz,
c) Berechnung eines den Grad der Übereinstimmung zwischen der Röntgenaufnahme und dem Pseudo-Projektionsbild kennzeichnenden Ähnlichkeitsmaßes,
d) Wiederholung der Schritte b) und c) mit geänderten Projektionsparametern, bis auf Basis des Ähnlichkeitmaßes die beste Übereinstimmung erreicht ist,
e) Bestimmung der räumlichen Transformation unter Verwendung der Projektionsparameter des Pseudo-Projektionsbildes das mit der Röntgenaufnahme am besten übereinstimmt.

Außerdem bezieht sich die Erfindung auf eine Anordnung zur Durchführung eines solchen Verfahrens.
Die Erfindung wird durch die Patentansprüche bestimmt, wobei die Verfahrensansprüche 1-9 zwar operationsvorbereitende Verfahren umfassen, nicht jedoch Verfahren in deren Verlauf es tatsächlich zu irgendeinem chirurgischen Eingriff kommt.
In der Patentschrift US4791934 ist ein Verfahren offenbart, bei dem von einem Patienten zunächst ein 3D Bild und anschließend ein 2D Röntgenbild erzeugt wird. Aus dem 3D Bild wird danach ein 2D Bild synthetisiert, wobei die örtliche Position und der Aufnahmewinkel denen des tatsächlich erzeugten 2D Bildes möglichst entsprechen sollen. Die örtliche Position und der Aufnahmenwinkel des synthetischen Bildes werden solange variiert, bis eine optimale Übereinstimmung zu dem tatsächlich erzeugten 2D Bild durch Vergleich gefunden ist.
Bei verschiedenen chirurgischen Verfahren kommt es darauf an, einen bestimmten Punkt im Körper eines Patienten genau zu lokalisieren. Beispielsweise ist es bei der Wirbelsäulen-Chirurgie erforderlich, Schrauben im Wirbelkörper zu plazieren, wobei eine Verletzung des Spinalkanals unbedingt vermieden werden muß. Bei anderen chirurgischen Eingriffen kommt es darauf an, die Lage der Aorta zu kennen. Zu diesem Zweck wird vor dem Eingriff eine dreidimensionale Darstellung eines zu behandelnden Patienten erzeugt, beispielsweise mittels eines Computertomographen, und anhand dieser dreidimensionalen Darstellung wird das Vorgehen beim chirurgischen Eingriff geplant. Bei dem Eingriff befindet sich der Patient in der Regel nicht mehr in derselben Position wie bei der Akquisition des Datensatzes, aus dem die dreidimensionale Darstellung des Patienten abgeleitet wird, so daß es erforderlich ist, die räumlichen Transformationen zwischen dem Patienten und seiner dreidimensionalen Darstellung zu ermitteln, damit man einen bestimmten Punkt im Datensatz einem Punkt im Patienten zuordnen kann.
Diesem Zweck dient das eingangs genannte Verfahren, das aus der Zeitschrift "Medical Physics", Vol. 21, Nr. 11, Nov. 1994, Seiten 1749-1760, bekannt ist. Wenn bei diesem Verfahren die Projektionsparameter des Pseudo-Projektionsbildes so gewählt sind, daß das Objekt in bezug auf die Bildebene und den Projektionspunkt genauso liegt, wie das Objekt in bezug auf die Strahlenquelle und den Bildaufnehmer bei der Röntgenaufnahme, dann stimmen das Pseudo-Projektionsbild und die Röntgenaufnahme überein. Bei der Zuordnung zwischen dem Objekt und seiner dreidimensionalen Darstellung kann dann von diesen Projektionsparametern ausgegangen werden. Um die optimalen Projektionsparameter zu ermitteln, werden die Projektionsparameter so lange variiert, bis die Übereinstimmung erreicht wird. Der Grad der Übereinstimmung wird mittels eines Ähnlichkeitsmaßes berechnet, z.B. mittels einer Kreuzkorrelationsfunktion.
Der Vorteil dieses Verfahrens besteht darin, daß man auf einen Referenzrahmen oder auf Referenzmarker verzichten kann, die mit dem Objekt bei der Erzeugung des dreidimensionalen Datensatzes und bei der Röntgenaufnahme verbunden sind. Außerdem ist es nicht erforderlich, die Röntgenaufnahme zu segmentieren oder charakteristische Punkte in der Röntgenaufnahme oder im Datensatz anzugeben, um eine genaue Zuordnung zwischen der Röntgenaufnahme und der dreidimensionalen Darstellung zu erreichen.
Nachteilig an dem bekannten Verfahren ist allerdings der hohe Rechenaufwand, weil die Pseudo-Projektionsbilder für das gesamte Volumen berechnet werden müssen, das im dreidimensionalen Datensatz dargestellt ist. Außerdem können die Ergebnisse ungenau werden, wenn in der Röntgenaufnahme Gegenstände abgebildet werden (z.B. chirurgische Instrumente oder der Operationstisch), die bei der Aufnahme des dreidimensionalen Datensatzes nicht abgebildet wurden.
Aufgabe der vorliegenden Erfindung ist es, ein Verfahren der eingangs genannten Art so auszugestalten, daß die räumliche Zuordnung zwischen Objekt und dessen dreidimensionaler Darstellung mit geringerem Aufwand bestimmt werden kann. Diese Aufgabe wird erfindungsgemäß durch folgende Schritte gelöst:

f) Vorgabe eines Teilvolumens des Untersuchungsbereiches vor der Ableitung von Pseudo-Projektionsbildern,

g) Erzeugung jedes Pseudo-Projektionsbildes aus einem auf das Teilvolumen beschränkten Teil des Datensatzes,

h) Ableitung je eines Differenzbildes entweder aus der Röntgenaufnahme und je einem Pseudo-Projektionsbild oder aus in gleicher Weise gefilterten Versionen der Röntgenaufnahme und je eines Pseudo-Projektionsbildes, derart, daß sich gleiche Strukturen in diesen Bildern im Differenzbild auslöschen,

i) Verwendung eines von der Struktur-Vielfalt in wenigstens einem Ausschnitt des Differenzbildes abhängigen Maßes als Ähnlichkeitsmaß.

Bei der Erfindung wird nicht das ganze, im dreidimensionalen Datensatz abgebildete Volumen zur Erzeugung der Pseudo-Projektionsbilder herangezogen, sondern nur ein Teilvolumen, das für die Diagnose relevant ist, z.B. ein Wirbelkörper. Dessen Volumen ist nur noch ein Bruchteil des durch den Datensatz abgebildeten Volumens, so daß die Berechnung der Pseudo-Projektionsbilder wesentlich schneller erfolgen kann. Allerdings versagen dann die Ähnlichkeitsmaße, die bei den bekannten Verfahren benutzt werden, weil sie voraussetzen, daß in der Röntgenaufnahme und im Pseudo-Projektionsbild identische Bildregionen vorhanden sind. Wenn bei der Erzeugung des Pseudo-Projektionsbildes ein auf das Teilvolumen beschränkter Datensatz herangezogen wird, gilt diese Prämisse in der Regel nicht, weil in der Röntgenaufnahme auch Organe und dergl. abgebildet werden, die vor oder hinter dem Teilvolumen liegen. Bei der Erfindung wird deshalb ein Ähnlichkeitsmaß benutzt, das von der Strukturvielfalt in einem Differenzbild (oder einem Ausschnitt dieses Differenzbildes) abhängt, das aus der Röntgenaufnahme und einem Pseudo-Projektionsbild abgeleitet wird.

Dem liegt folgende Überlegung zugrunde. Wenn das Teilvolumen, z.B. der Wirbelkörper, bei der Berechnung des Pseudo-Projektionsbildes in bezug auf die Bildebene und den Projektionspunkt die gleiche räumliche Lage einnimmt wie derselbe Wirbelkörper bei der Röntgenaufnahme, dann unterscheiden sich die Röntgenaufnahme und das Pseudo-Projektionsbild in diesem Bereich dadurch voneinander, daß die Röntgenaufnahme zusätzlich auch noch vor oder hinter dem Wirbelkörper liegende Bereiche abbildet. Gleichwohl bedeutet dies, daß im Idealfall die Abbildung des Wirbelkörpers im Differenzbild eliminiert wird. In diesem Bereich enthält das Differenzbild also weniger Strukturen als die Röntgenaufnahme bzw. als ein Differenzbild, in dem die Abbildungen der Wirbelkörper nicht zusammenfallen. Somit ist die Strukturvielfalt bzw. die Zahl der Strukturen im Differenzbild ein geeignetes Maß für die Ähnlichkeit zwischen Pseudo-Projektionsbild und Röntgenaufnahme: je weniger Strukturen im Differenzbild vorhanden sind, umso ähnlicher sind die beiden Bilder. Dies gilt unabhängig davon, ob das Differenzbild direkt aus dem Pseudo-Projektionsbild und der Röntgenaufnahme oder aus gefilterten Versionen dieser Bilder abgeleitet wird.

Das Verfahren läßt sich relativ schnell durchführen, weil zur Berechnung eines Projektionsbildes nur die Voxel in dem Teilvolumen herangezogen werden. - Die Struktur-Vielfalt in einem Differenzbild nimmt zwar zu, wenn in der Röntgenaufnahme beispielsweise ein Katheter abgebildet wird, der bei der Erstellung des Datensatzes nicht vorhanden war. Jedoch vergrößert sich dadurch die Struktur - Vielfalt in allen Differenzbildern im gleichen Ausmaß. Die Optimierung der Projektionsparameter anhand des daraus abgeleiteten Ähnlichkeitsmaßes wird dadurch also nicht beeinflußt.

Die Bildwerte an den einzelnen Bildpunkten des Pseudo-Projektionsbildes und der Röntgenaufnahme stimmen nicht notwendigerweise miteinander überein, auch wenn die Abbildungen des Teilvolumen (Wirbelkörper) sich in dem Pseudo-Projektionsbild und der Röntgenaufnahme an der gleichen Stelle befinden. In diesem Fall verschwinden die ihnen im Differenzbild zugeordneten Strukturen nicht ganz. Die sich daraus auf das Ähnlichkeitsmaß ergebenden Auswirkungen lassen sich nach einer Weiterbildung der Erfindung dadurch reduzieren, daß vor der Ableitung eines Differenzbildes die Bildwerte der Röntgenaufnahme und/oder des Pseudo-Projektionsbildes mit einem Skalierungsfaktor gewichtet werden.

Grundsätzlich ist es möglich, den Datensatz zur dreidimensionalen Darstellung des Objekts mit einer beliebigen bildgebenden Modalität zu erzeugen, z.B. einem MR-Gerät. Dies ist jedoch auf Sonderfälle beschränkt. Ein solcher Sonderfall wäre die Darstellung eines Gefäßsystems in einem MR-Angiogramm und in einer Röntgenaufnahme (mit Kontrastmittel). Eine Ausgestaltung der Erfindung sieht demgegnüber vor, daß der Datensatz vor der Röntgenaufnahme mit einem Computertomographen erzeugt wird. Dabei ist in noch weiterer Ausgestaltung vorgesehen, daß vor der Erzeugung eines Pseudo-Projektionsbildes ein konstanter Wert von den Voxel-Werten der Voxel des Teilvolumens subtrahiert wird. Als Voxel wird dabei ein Volumenelement bezeichnet und als Voxel-Wert der Absorptionswert, der einem Voxel zugeordnet ist. Durch diese Ausgestaltung läßt sich vermeiden, daß an den Rändern des Bildausschnittes, in den das Teilvolumen projiziert wird, ein Helligkeitssprung hervorgerufen wird, der unter Umständen negative Auswirkungen auf die Güte des Ähnlichkeitsmaßes haben könnte.

Eine andere Weiterbildung der Erfindung sieht vor, daß zur Bestimmung der Struktur-Vielfalt die Zahl der Pixel im Differenzbild oder einem Ausschnitt davon ermittelt wird, deren Bildwerte sich von den Bildwerten benachbarter Pixel unterscheiden. Je mehr Pixel (als Pixel wird ein Bildelement bezeichnet) in dem Differenzbild sich in ihrem Bildwert von den Bildwerten ihrer Nachbar-Pixel unterscheiden, desto größer ist die Strukturvielfalt, und deshalb ist diese Zahl der Pixel ein geeignetes Ähnlichkeitsmaß.

Dabei kann in noch weiterer Ausgestaltung der Erfindung vorgesehen sein, daß zur Berechnung des Ähnlichkeitsmaßes eine die Differenz der Bildwerte von einander benachbarten Pixeln gewichtende Bewertungsfunktion benutzt wird, die bei kleinen Differenzen einen ersten Wert und bei großen Werten einen vom ersten abweichenden zweiten Wert ergibt, und daß die durch die Bewertungsfunktion gewichteten Differenzen summiert werden. Dieser Verlauf der Bewertungsfunktion stellt sicher, daß kleine Abweichungen zwischen den Bildwerten, wie sie z.B. durch Rauschen verursacht werden können, keinen Eintluß auf das Ähnlichkeitsmaß haben, während bei Abweichungen oberhalb einer bestimmten Größe die Bildwerte als unterschiedlich gewertet werden - unabhängig vom Ausmaß der Abweichung.

Dabei ist es nicht sinnvoll, die Bildwerte von weit auseinander liegenden Pixeln zu vergleichen, weil solche großräumigen Unterschiede von Bildwerten auch andere Ursachen haben können. Eine Weiterbildung der Erfindung sieht daher vor, daß zur Berechnung des Ähnlichkeitsmaßes für jedes Pixel nur die Bildwerte von innerhalb eines Kreises um dieses Pixel befindlichen Pixeln herangezogen werden. Dabei werden bei der Entscheidung darüber, ob ein Bildpunkt innerhalb einer Struktur liegt oder nicht, nur die Bildpunkte herangezogen, die innerhalb eines bestimmten Radius um den betreffenden Bildpunkt liegen.

In noch weiterer Ausgestaltung ist dabei vorgesehen, daß das Ähnlichkeitsmaß aus den Bildwerten der Pixel eines Differenzbildes nach der Beziehung

$$P = \sum_{i,j} \sum_{k,l} \frac{1}{1 + \frac{1}{\sigma^2}(I_d(i,j) - I_d(i+k,j+l))^2}$$

berechnet wird, wobei

- i,j die Pixel zumindest eines Ausschnitts des Differenzbildes sind,
- $I_d(i,j)$ die zugehörigen Bildwerte sind,
- $\sigma$ ein vorgebbarer Parameter ist und
- k,l ganzzahlige Werte, die der Beziehung

$$r^2 \geq k^2 + l^2$$

genügen, wobei r ein vorgebbarer Parameter ist.

Mit dem auf diese Weise gewonnenen Ähnlichkeitsmaß läßt sich die räumliche Zuordnung zwischen dem Objekt bzw. der Röntgenaufnahme des Objektes und seiner aus dem Datensatz abgeleiteten dreidimensionalen Darstellung sehr genau ermitteln.

Wenn das Differenzbild aus räumlich gefilterten Versionen der Röntgenaufnahme bzw. eines Pseudo-Projektionsbildes abgeleitet wird, kann das Ähnlichkeitsmaß gemäß Anspruch 9 bestimmt werden.

Eine Anordnung zur Durchführung des Verfahrens nach Anspruch 1 ist versehen mit einer ersten bildgebenden Einrichtung zur Erzeugung eines ein Objekt räumlich dreidimensional abbildenden Datensatzes und mit einer Röntgeneinrichtung zur Erzeugung von Röntgenaufnahmen des in einem Untersuchungsbereich befindlichen Objektes,

mit Mitteln zur Ableitung von Pseudo-Projektionsbildern aus dem Datensatz, mit Mitteln zur Berechnung von den Grad der Übereinstimmung zwischen der Röntgenaufnahme und je einem Pseudo-Projektionsbild kennzeichnenden Ähnlichkeitsmaßen,

und mit einer Bildverarbeitungseinheit, die so programmiert ist, daß folgende Bildverarbeitungsoperationen durchgeführt werden:

A) Vorgabe eines Teilvolumens des Untersuchungsbereiches vor der Ableitung von Pseudo-Projektionsbildern,

B) Erzeugung jedes Pseudo-Projektionsbildes aus einem auf das Teilvolumen beschrämkten Teil des Datensatzes,

C) Ableitung je eines Differenzbildes entweder aus der Röntgenaufnahme und je einem Pseudo-Projektionsbild oder aus in gleicher Weise gefilterten Versionen der Röntgenaufnahme und je eines Projektionsbildes, derart, daß sich gleiche Strukturen in diesen Bildern im Differenzbild auslöschen,

D) Verwendung eines von der Struktur-Vielfalt in wenigstens einem Ausschnitt des Differenzbildes abhängigen Maßes als Ähnlichkeitsmaß.

Die Erfindung wird nachstehend anhand der Zeichnungen näher erläutert. Es zeigen:

Fig. 1 eine schematische Darstellung des Verfahrens,

Fig. 2 die Erzeugung eines Projektionsbildes von einem Teilvolumen,

Fig. 3 ein Diagramm zur Erläuterung des Verfahrensablaufs und

Fig. 4 den Verlauf der Bewertungsfunktion, mit dem unterschiedliche Bildwerte im Differenzbild gewichtet werden.

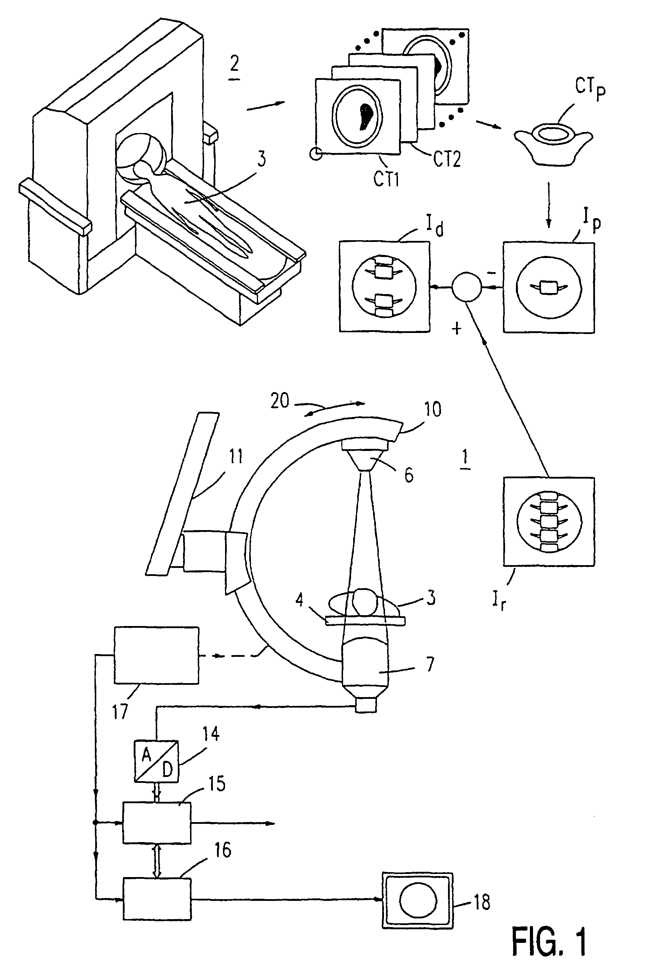

Fig. 1 zeigt einen Computer-Tomographen 2, mit dem von einem Patienten 3 vor Beginn eines chirurgischen Eingriffs eine Folge von Computer-Tomogrammen CT1, CT2 usw. angefertigt wird, die parallele, zur Längsachse des Patienten senkrechte Schichten darstellen. Diese Computer-Tomogramme bilden einen Datensatz zur dreidimensionalen Darstellung des Patienten. Anhand dieses Datensatzes läßt sich der später auszuführende chirurgische Eingriff genau planen.

Dabei wird ein - in Fig. 1 gesondert dargestelltes - Teilvolumen $CT_p$ vorgegeben, das für den späteren Eingriff relevant ist. Das Teilvolumen kann ein Quader sein, der einen für den späteren Eingriff wesentlichen Bereich des Patienten, z.B. einen Wirbelkörper, umschließt. Jedoch kann auch der Wirbelkörper selbst dieses Teilvolumen darstellen. Dazu muß das Teilvolumen entweder automatisch oder manuell segmentiert werden. Dies ist zwar relativ zeitaufwendig, jedoch stört dieser Zeitaufwand insofern nicht, als er vor dem Beginn des chirurgischen Eingriffs erbracht wird.

Nach dieser Vorbereitungsphase wird mit Bezug auf Ansprüche 1-9 vor Beginn oder mit Bezug auf Anspruch 10 auch während des chirurgischen Eingriffs eine Röntgenaufnahme angefertigt, wobei der Patient 3 sich in einem Operationsraum auf einem Operationstisch 4 befindet. Die Röntgenaufnahme kann mittels eines Röntgen-Untersuchungsgerätes 1 erfolgen, bei dem ein Röntgenstrahler 6 und ein Bildaufnehmer 7 an einem C-Bogen 10 befestigt sind, der von einem nicht näher dargestellten Stativ 11 getragen wird. Der C-Bogen mit dem Röntgenstrahler 6 und dem Bildaufnehmer 7 kann bei Bedarf um wenigstens eine horizontale Achse geschwenkt werden.

Der Röntgenbildaufnehmer 7, beispielsweise ein Röntgenbildverstärker mit angeschlossener Fernsehkette, liefert seine Ausgangssignale über einen Analog-Digitalwandler 14 zu einem Bildspeicher 15, der mit einer Bildverarbeitungseinheit 16 verbunden ist, die auch den vom Computer-Tomographen 2 erstellten Datensatz verarbeiten kann, der in dem Bildspeicher 15 oder einem gesonderten Bildspeicher enthalten sein kann. Die Bildverarbeitungseinheit 16 ist an einen Wiedergabe-Monitor 18 angeschlossen. Die genannten Komponenten werden von einer programmierbaren Steuereinheit 17 gesteuert.

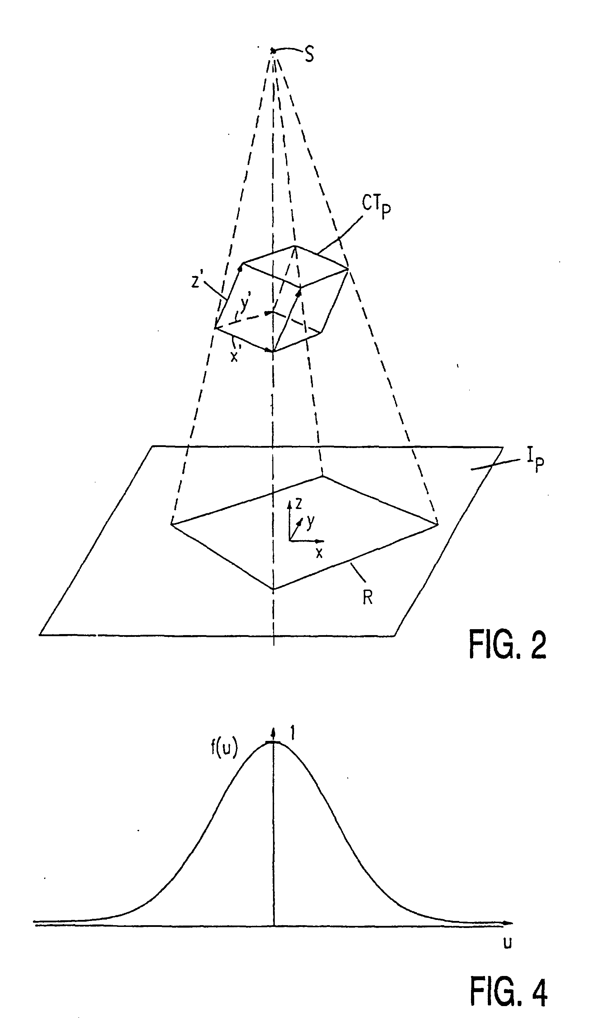

Die räumliche Transformation bzw. Zuordnung zwischen der Abbildung des Patienten, insbesondere des segmentierten Wirbelkörpers, durch den CT-Datensatz und der Lage dieses Wirbekörpers im Raum, wird mit Hilfe der Röntgenaufnahme ermittelt. Zur Ermittlung dieser Transformation werden außerdem von dem Teilvolumen $CT_p$ Pseudo-Projektionsbilder $I_p$ erzeugt, was in Fig. 2 schematisch erläutert ist. Die Größe des Pseudo-Projektionsbildes $I_p$ entspricht der Größe der Röntgenaufnahme. Die Lage des Projekitonspunktes S. von dem aus das Teilvolumen in das Pseudo-Projektionsbild projiziert wird, in bezug auf dieses Bild entspricht der Lage des Röntgenstrahlers 6 (bzw des die Röntgenstrahlung emittierenden Brennflecks des Röntgenstrahlers) in Bezug auf den Bildaufnehmer 7 bei der Röntgenaufnahme. Man erkennt aus Fig. 2, daß die Projektion des Teilvolumens $CT_p$ in dem Pseudo-Projektionsbild $I_p$ nur einen Ausschnitt bedeckt, dessen Rand mit R bezeichnet ist.

In der Regel stimmt die zunächst gewählte Ausgangsposition des Teilvolumens $CT_p$ in bezug auf den Projektionspunkt S und die Projektionsrichtung nicht mit der Position und der Ausrichtung des realen Teilvolumens bei der Erzeugung der Röntgenaufnahme in bezug auf den Röntgenstrahler 6 und den Bildaufnehmer 7 überein. Deshalb werden diese Projektionsparameter (d.h. die Lage und die Ausrichtung) des Teilvolumens in bezug auf den Projektionspunkt S und die Ebene des Projektionsbildes $I_p$ verändert und es werden Projektionsbilder mit diesen geänderten Projektionparametern errechnet.

Fig. 1 zeigt ein Pseudo-Projektionsbild $I_p$, und die Röntgenaufnahme $I_r$, die mit dem bildgebenden System 6, 7 angefertigt wurde. Aus diesen beiden Bildern wird ein Differenzbild $I_d$ abgeleitet, wobei sich die Abbildung des Wirbelkörper $CT_p$ im Differenzbild auslöscht, wenn die dem Pseudo-Projektionsbild zugrundegelegte Lage und Ausrichtung des Wirbelkörpers $CT_p$ mit der Lage und der Ausrichtung des realen Wirbelkörper in bezug auf den Röntgenstrahler 6 und den Bildaufnehmer 7 übereinstimmt.

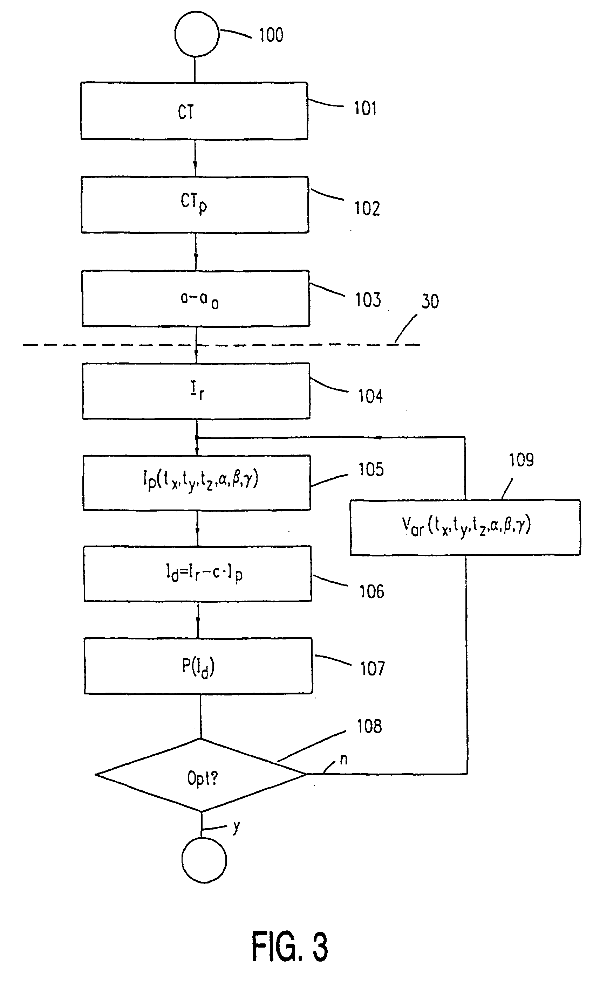

Das erfindungsgemäße Verfahren wird nachfolgend anhand des Ablaufdiagramms in Fig. 3 noch einmal im Detail erläutert.

Nach der Initialisierung (100) wird zunächst mit Hilfe des Computer-Tomographen 2 ein Datensatz des Patienten akquiriert, der die Absorptionsverteilung innerhalb eines Untersuchungsvolumens dreidimensional wiedergibt (Schritt 101). Damit ist jedem Voxel innerhalb des Untersuchungsvolumens ein Voxel-Wert zugeordnet, der die Absorption des betreffenden Voxels für Röntgenstrahlung darstellt.

Im folgenden Schritt (102) wird von dem Untersuchungsvolumen ein Teilvolumen $CT_p$ (Fig. 1) ausgewählt. Dieses Teilvolumen entspricht nur einem Bruchteil des ursprünglichen Untersuchungsvolumens, z.B. einem Zwanzigstel oder weniger. Es umfaßt den für den Eingriff relevanten, vorzugsweise starren Teil des Untersuchungsbereiches, z.B. einen Wirbelkörper. Die Auswahl kann manuell (durch Vorgabe eines den Bereich umschließenden Quaders), aber auch automatisch durch Segmentierung erfolgen.

Im Schritt 103 wird von den (ortsabhängigen) Voxel-Werten a der im Teilvolumen befindlichen Voxel ein konstanter Wert $a_0$ subtrahiert, der dem Mittelwert der Absorption in der Umgebung des Teilvolumens bzw. des segmentierten Wirbelkörpers entspricht. Danach sind den Voxeln des Teilvolumens Voxel-Werte zugeordnet, die der Differenz der zwischen der Absorption des betreffenden Voxels und der Umgebung entsprechen. Dadurch wird verhindert, daß später in dem Differenzbild $I_d$ im Bereich der Ränder (R - Fig.2) des Bildausschnittes Kanten bzw. Helligkeitssprünge entstehen. In den weiteren Verfahrensschritten werden nur noch die so berechneten Voxel-Werte der Voxel des Teilvolumens berücksichtigt. Die außerhalb des Teilvolumens befindlichen Voxel spielen für das weitere Verfahren keine Rolle mehr.

Die Schritte 101 bis 103 erfolgen selbst mit Bezug auf Anspruch 10 vor dem eigentlichen Eingriff, wie durch die gestrichelte Linie 30 angedeutet. Danach wird der Patient 3 auf den Operationstisch 4 gebettet, und es wird eine Röntgenaufnahme $I_r$ angefertigt - Schritt 104. Lage und Ausrichtung des bildgebenden Systems 6, 7 in bezug auf den Operationstisch 4 bzw. auf den Raum, in dem die Operation stattfindet, werden durch ein geeignetes, in Fig. 1 nicht dargestelltes System registriert.

Im nächsten Schritt (105) wird ein Pseudo-Projektionsbild $I_p$ des vorgegebenen Teilvolumens $CT_p$ berechnet, wobei die gleiche Position des Projektionspunktes S in bezug auf die Bildebene des Projektionsbildes $I_p$ zugrunde gelegt wird, die der Röntgenstrahler 6 bei der Röntgenaufnahme in bezug auf den Eingangsschirm des Bildaufnehmers 7 innehatte. Ein Bildwert für ein Pixel in dem Projektionsbild wird aus den Voxel-Werten (Absorptionswerten) all der Voxel des Teilvolumens abgeleitet wird, die sich auf dem Verbindungsstrahl des Pixels mit dem Projektionspunkt S befinden. Dies wird für alle Bildpunkte des Projektionsbildes wiederholt, wonach das Pseudo-Projektionsbild erstellt ist.

Dieses Pseudo-Projektionsbild hängt von der Lage des Teilvolumens $CT_p$ und seiner Orientierung in bezug auf ein ortsfestes Koordinatensystem x', y', z' ab. Deshalb läßt sich jedes Projektionsbild durch sechs Projektionsparameter kennzeichnen, die in dem Koordinatensystem die Position (diese Parameter werden mit $t_x$, $t_y$ und $t_z$ bezeichnet) und die Winkelstellung bzw. die Orientierung (diese Parameter werden mit $\alpha$, $\beta$ und $\gamma$ bezeichnet) des Teilvolumens in bezug auf das feste Koordinatensystem darstellen.

Das Pseudo-Projektionsbild und die Röntgenaufnahme sollten die gleiche Zahl von Pixeln aufweisen, z.B. 128 x 128. Wenn die Originalbilder eine höhere Auflösung aufweisen, z.B 512 x 512 werden diese Bilder einer geeigneten Tiefpaß-Filterung unterzogen, und der Bildwert jedes Pixels wird aus aus den Bildwerten von mehreren (16) Pixeln des Origmalbildes abgeleitet wird. - Das Pseudo-Projektionsbild und die Röntgenaufnahme sollten auch eine vergleichbare Bildschärfe haben. Wenn die Bildschärfe des Pseudo-Projektionsbildes aufgrund der Auflösung des CT-Datensatzes kleiner ist als die der Röntgenaufnahme, wird aus dem CT-Datensatz durch Interpolation eine höher aufgelöste Darstellung des Teilvolumens $CT_p$ abgeleitet.

In den folgenden Schritten muß festgestellt werden, inwieweit die bei der Berechnung des Projektionsbildes angenommene Lage und Ausrichtung des Teilvolumens $CT_p$ der Lage und der Ausrichtung des realen Teilvolumens in bezug auf das bildgebende System 6. 7 bei der Anfertigung der Röntgenaufnahme entsprechen. Dazu wird zunächst im Schrittb 106 ein Differenzbild $I_d$ aus der Röntgenaufnahme $I_t$ und dem Projektionsbild $I_p$ abgeleitet. Dazu müssen die Bildwerte der zueinander korrespondierenden Pixel in der Röntgenaufnahme $I_r$ und dem Pseudo-Projektionsbild $I_p$ nicht notwendigerweise voneinander subtrahiert werden; wenn in dem Pseudo-Projektionsbild einem Bereich mit hoher Absorption ein niedriger Bildwert und in der Röntgenaufnahme einem solchen Bereich ein großer Bildwert zugeordnet ist, müssen die Bildwerte addiert werden. Wenn im folgenden von einem Differenzbild gesprochen wird, soll auch eine solche additive Überlagerung eingeschlossen sein. Wesentlich ist nur, daß die Überlagerung so erfolgt, daß sich gleiche Strukturen, die sich in der Röntgenaufnahme und im Projektionsbild an derselben Stelle befinden, in dem Differenzbild auslöschen.

Da die Voxel-Werte des Teilvolumens und die Bildwerte der Röntgenaufnahme nicht mit demselben bildgebenden System gewonnen werden, kann es zusätzlich erforderlich sein, beide Bildwerte in ihrem Dynamikumfang aneinander anzupassen, indem entweder die Bildwerte der Röntgenaufnahme $I_r$ oder die Bildwerte des Pseudo-Projektionsbildes $I_p$ mit einem Skalierungsfaktor c gewichtet werden, bevor sie voneinander subtrahiert (oder addiert) werden.

Im nächsten Verfahrensschritt (107) wird auf Basis des Differenzbildes $I_d$ - oder einem durch die Konturen R des Projektionsbildes (vergl. Fig. 2) bestimmten Ausschnitt des Differenzbildes - ein Ähnlichkeitsmaß gebildet. Dieses Ähnlichkensmaß beruht auf folgender Überlegung:

Wenn im Idealfall der Berechnung des Pseudo-Projektionsbildes die gleiche Lage und Ausrichtung des Teilvolumens in Bezug auf den Projektionspunktspunkt und die Bildebene (vgl. Fig 2.) zugrundelag, die das (reale) Teilvolumen bei der Anfertigung der Röntgenaufnahme in Bezug auf den Röntgenstrahler bzw. den Bildaufnehmer hatte, dann liegt die Abbildung des Teilvolumens im Pseudo-Projektionsbild und in der Röntgenaufnahm an derselben Stelle. Im Differenzbild löschen sich diese Abbildungen aus. Das Differenzbild (oder ein Ausschnitt davon) enthält dann also nur noch ein Minimum an Strukturen. Bei Abweichungen von dem Idealfall sind im Differenzbild mehr Strukturen vorhanden. Deshalb ist die Struktur-Vielfalt ein geeignetes Ähnlichkeitsmaß: Je weniger Strukturen das Differenzbild enthält, desto ähnlicher sind sich die Röntgenaufnahme $I_r$ und das Pseudo-Projektionsbildes $I_p$.

Ein Pixel wird dann als zu einer Struktur gehörig angesehen, wenn es sich möglichst deutlich von einer möglichst großen Zahl seiner Nachbar-Pixel unterscheidet. Dabei werden als benachbart aber nur solche Pixel angesehen, deren Mittelpunkt sich in einem Kreis mit dem Radius r um das betreffende Pixel befindet. Ein geeigneter Wert für r kann das Zwei- bis Zehnfache der Pixel-Breite sein, bei einem 128 x 128 Bild beispielsweise das Dreifache der Pixel-Breite.

Für die Berechnung des Ahnlichkeitsmaßes bzw. der Struktur-Vielfalt soll die Differenz der Bildwerte von benachbarten Pixeln mittels einer Bewertungsfunktion gewichtet werden, die bei kleinen Differenzen einem ersten Wert - z.B. dem Wert Eins - zustrebt und bei großen Differenzen einem zweiten Wert - z.B. dem Wert Null - und im Übergangsbereich zwischen großen und kleinen Werten monoton verläuft.

Eine solche Bewertungsfunktion ist in Fig. 4 dargestellt, wobei auf der Abszisse die Differenz u der Bildwerte zweier benachbarter Pixel aufgetragen ist und auf der Ordinate die zugehörige Bewertungsfunktion f(u). Man erkennt, daß die Funktion f(u) für kleine Differenzen u nur wenig vom Maximalwert (Eins) abweichende Funktionswerte hat, während sie für große Differenzen asymptotisch dem Wert Null zustrebt. Dadurch wird erreicht, daß kleine Abweichungen, wie sie beispielsweise durch Rauschen hervorgerufen werden können, etwa in gleicher Weise bewertet werden wie übereinstimmende Bildwerte, und daß große Abweichungen unabhängig von ihrer Größe bewertet werden. Im Übergangsbereich ändert sich die Funktions f(u) monoton, und dort besitzt sie auch einen Wendepunkt.

Die Bewertungsfunktion f(u) kann einer Lookup-Tabelle entnommen werden, die jedem Eingangwert, d.h. jeder Differenz u zwischen zwei Bildwerten einen Wert f(u) gemäß Fig. 4 zuordnet. Jedoch ist es auch möglich, f(u) analytisch aus u zu berechnen, beispielsweise nach der Beziehung

$$f(u) = e^{-\frac{u^2}{\sigma^2}} \tag{1}$$

Dabei ist $\sigma$ ein geeignet gewählter Parameter. Nachteilig ist der relativ große Rechenaufwand für die Berechnung der Exponential-Funktion f(u). Eine schneller berechenbare Funktion ergibt sich aus der Gleichung

$$f(u) = \frac{1}{1+\frac{u^2}{\sigma^2}} \tag{2}$$

Ein geeigneter Wert ist $\sigma = 10$ (wenn der Dynamikbereich der Röntgenaufnahme bzw. des Projektionsbildes zwischen 0 und 255 liegt). Für Bildwertdifferenzen u von einem Drittel des Wertes $\sigma$ oder weniger hat f(u) einen Wert von 0,9 oder mehr, während bei Bildwertdifferenzen von mehr als dem Dreifachen von $\sigma$ die f(u)einen Wert von weniger als 0,1 aufweist.

Damit ergibt sich ein geeignetes, von der Struktur-Vielfalt abhängiges Ähnlichkeitsmaß nach der Beziehung

$$P = \sum_{i,j} \sum_{k,l} f(I_d(i,j) - I_d(i+k,j+l)) \tag{3}$$

Dabei stellen i,j die Koordinaten eines Pixels im Differenzbild bzw. in einem Differenzbild-Ausschnitt dar und $I_j(i,j)$ den zu diesem Pixel gehörenden Bildwert. k,l sind ganze Zahlen, für die die Beziehung gilt

$$r^2 \geq k^2 + l^2 \tag{4}$$

wobei r den Radius des Kreises festlegt, innerhalb dessen die Pixel dem Pixel i, j benachbart sind. Der Summand f( ) in Gleichung (3) entspricht f(u), sodaß für u gilt

$$u = I_d(i,j) - I_d(i+k,j+l) \tag{5}$$

Gleichung (3) besagt, daß für ein bestimmtes Pixel i,j die Differenzen zwischen dem Bildwert $I_d$ (i,j) dieses Pixels einerseits und den Bildwerten $I_d$ (i+k,j+l) der Nachbarpixel mit der Bewertungsfunktion f(u) zu gewichten und die Summe über diese Bewertungsfunktionen zu berechnen ist. Dies ist für alle Pixel i,j - zumindest in dem Bildausschnitt R - zu wiederholen, und die erhaltenen Summenwerte sind ihrerseits zu summieren.

Setzt man Gleichung (5) in Gleichung (2) ein, ergibt sich für die Berechnung des Ähnlichkeitsmaßes P die folgende Gleichung

$$P = \sum_{i,j} \sum_{k,l} \frac{1}{1+\frac{1}{\sigma^2}(I_d(i,j)-I_d(i+k,j+l))^2} \tag{6}$$

Bei der vorstehenden Erläuterung des Schrittes 107 wurden zunächst die Bilder $I_r$ (Röntgenaufnahme) und $I_p$ (Pseudoprojektionsbild) zwecks Erzeugung des Differenzbildes Pixel für Pixel voneinander subtrahiert, und danach wurde die Differenz der Bildwerte von in diesem Differenzbild einander benachbarten Pixeln zur Bestimmung des Ähnlichkeitsmaßes herangezogen. Man kann aber auch umgekehrt vorgehen und zunächst getrennt für die Bilder $I_r$ und $I_p$ die Differenz der Bildwerte benachbarter Pixel bestimmen und erst anschließend aus der Differenz der so modifizierten Bilder ein Differenzbild ableiten. Auch in diesem Differenzbild sind umso weniger Strukturen enthalten, je besser $I_r$ und $I_p$ übereinstimmen. Im einzelnen gilt dann folgendes:

Es wird zunächst für $I_r$ und $I_p$ getrennt die Differenz der Bildwerte benachbarter Pixel bestimmt, sodaß sich sogenannte Gradientenbilder - z.B. mit einem Gradienten in i-Richtung - ergeben nach der Beziehung

$$I_{gri}(i,j) = I_r(i-1,j)-I_r(i+1,j) \tag{7}$$

bzw.

$$I_{gpi}(i,j) = I_p(i-1,j) - I_p(i+1,j) \tag{8}$$

Analog können auch Gradientenbilder für die j-Richtung gebildet werden:

$$I_{gpj}(i,j) = I_p(i,j-1) - I_p(i,j+1) \tag{9}$$

bzw.

$$I_{grj}(i,j) = I_r(i,j-1)- I_r(i,j+1) \tag{10}$$

Daraus werden (Gradienten-)Differenzbilder abgeleitet nach der Beziehung:

$$I_{dgi}(i,j) = I_{gri}(i,j)- c\, I_{gpi}(i,j) \tag{11}$$

bzw.

$$I_{dgj}(i,j) = I_{grj}(i,j) - c\, I_{gpj}(i,j) \tag{12}$$

wobei c eine geeignet (vorzugsweise so daß der räumliche Mittelwert in beiden Bildern gleich ist) gewählte Konstante ist.

Analog zu Gleichung 6 wird das folgende, von der Strukturvielfalt abhängige Ähnlichkeirsmaß definiert :

$$P = \sum_{i,j} \frac{1}{1 + \frac{1}{\sigma_i^2} I_{dgi}(i,j)^2} + \sum_{i,j} \frac{1}{1 + \frac{1}{\sigma_j^2} I_{dgj}(i,j)^2} \qquad (13)$$

$\sigma_i$ und $\sigma_j$ sind dabei geeignet gewählte Parameter. Auch hierbei gilt wieder, daß P einen Maximalwert annimmt, wenn die Abbildung des Teilvolumens im Pseudo-Projektionsbild und in der Röntgenaufnahme an derselben Stelle liegen bzw wenn das Differenzbild ein Minimum an Strukturen enthält.

Im Prinzip kann es genügen, statt je ein Gradientenbild für die i- und die j-Richtung aus den Bildern $I_r$ und $I_p$ nur für eine der beiden Richtungen ein Gradientenbild abzuleiten, sodaß nur die Gleichungen 7,8,11 bzw 9,10, 12 berechnet werden müssen und in Gleichung 13 eine der beiden Summen entfällt. Unter ungünstigen Umständen kann dadurch aber die Genauigkeit des Verfahrens eingeschränkt werden.

Die Gradientenbilder gemäß den Gleichungen 7-10 stellen die erste Ableitung der Bilder $I_r$ bzw. $I_p$ in Richtung i bzw. j dar. Stattdesssen kann aber auch eine höhere Ableitung benutzt werden bzw. eine andere räumliche Filterung, vorzugsweise eine solche, die Abbildung von Kanten in den Bildern $I_r$ bzw. $I_p$ hervorhebt, z.B ein zweidimmensionale Hochpaßfilterung.

Nach dem Schritt 107 wird geprüft, ob das Ähnlichkeitsmaß P schon einen Optimalwert erreicht hat (Schritt 108). Ist dies nicht der Fall, dann werden die Schritte 105 ... 108 erneut durchlaufen, wobei jedoch zunächst im Schritt 109 die Projektionsparameter des Pseudo-Projektionsbildes variiert werden.

Zweckmäßigerweise wird dabei nur einer der sechs Projektionsparameter variiert, und zwar zunächst mit einer relativ großen Schrittweite, um zu erkennen, wo das Ähnlichkeitsmaß P sein Optimum, d.h. seinen Maximalwert hat. Danach werden die anderen Projektionsparameter ebenfalls variiert, bis das absolute Maximum des Ähnlichkeitsmaßes in dem sechsdimensionalen Projektionsparameterraum erreicht ist. Die Änderung der sechs Projektionsparameter - gegenüber ihrem beim erstmaligen Durchlaufen der Schleife 105 ... 108 vorgegebenen Ausgangswert - gestattet die genaue Bestimmung der Lage des Wirbelkörpers, der in dem segmentierten Teilvolumen dargestellt wird. Nachdem auf diese Weise das Optimum gefunden ist, ist das Verfahren beendet (109).

Gegebenenfalls kann das dem Optimum zugeordnete Differenzbild auf dem Monitor dargestellt werden, um dem Arzt eine visuelle Kontrolle der Übereinstimmung zu ermöglichen. In diesem Differenzbild dürfte der Wirbelkörper nur schwach oder gar nicht abgebildet sein.

Wie sich aus Gleichung (6) ergibt, ist es nicht unbedingt erforderlich, daß nach dem Schritt 105 die Bildwerte für alle Pixel des Differenzbildes gleichzeitig zur Verfügung stehen. Es würde in diesem Fall genügen, wenn nur die Pixel eines kleinen Teils des Differenzbildes bzw. des Ausschnitts R (Fig. 2) berechnet und der dazu gehörende Anteil des Ähnlichkeitsmaßes P ermittelt würde, wonach die Bildwerte eines anderen Teils des Differenzbildes berechnet werden müßten. Es ist also nicht erforderlich, daß alle Bildwerte des Differenzbildes oder auch nur des Ausschnittes gleichzeitig vorliegen müssen; jedoch soll der Begriff "Differenzbild" im Zusammenhang mit der Erfindung sich auch auf diese Fälle beziehen, in denen die Bildwerte - zumindest für den Ausschnitt R - zeitlich nacheinander vorliegen. Allerdings empfiehlt es sich, alle Bildwerte des Differenzbildes bzw. des Ausschnittes gleichzeitig vorliegen und gespeichert zu haben, weil man anderenfalls die einzelnen Bildwerte mehrfach berechnen müßte, wie die Gleichung (1) bzw. Gleichung (6) zeigt.

Im vorstehenden wurde das Teilvolumen für einen Wirbelkörper vorgegeben. Es können jedoch auch andere anatomische Bereiche als Teilvolumen segmentiert werden. z.B. Knochenstrukturen oder die mit Kontrastmittel gefüllte Aorta (bzw. ein Teil davon). Wesentlich ist nur, daß die Strukturen, auf die sich das Teilvolumen beschränkt, Röntgenstrahlung stärker oder schwächer absorbieren als die sie umgebenden Strukturen. Außerdem sollten diese Strukturen starr oder mit einem starren Teil verbunden sein - wie die Aorta mit der Wirbelsäule.

Mit dem erfindungsgemäßen Verfahren läßt sich die Zuordnung bzw. Transformation in x- und y-Richtung, d. h. in Richtung senkrecht zu dem den Röntgenstrahler 6 mit dem Bildaufnehmer 7 verbindenden Strahl, sehr genau bestimmen. In Richtung dieses Zentralstrahls ist die Bestimmung jedoch wesentlich ungenauer. Dies läßt sich dadurch vermeiden, daß eine zweite Röntgenaufnahme mit einem zu ertsen Aufnahme senkrechten Strahlengang angefertigt wird, wobei das Objekt in derselben Lage wie bei der ersten bleiben muß und das erfindungsgemäße Verfahren auch mit dieser zweiten Röntgenaufnahme ausgeführt wird. Alternativ können beide Röntgenaufnahmen auch gleichzeitig berücksichtigt werden. Dann müssen im Schritt 105 des Ablaufdiagramms in Fig. 3 zwei Pseudo-Projektionsbilder berechnet werden, wobei der unterschiedliche Strahlengang berücksichtigt wird. Im Schritt 106 sind dann aus den beiden Projektionsbildern und den beiden Röntgenaufnahmen zwei Differnzbilder abzuleiten. Im Schritt 107 werden aus beiden Differnzbildern Ähnlichkeitsmaße abgeleitet, die auf ggeignete Weise kombiniert - z.B. addiert - werden.

**Patentansprüche**

1. Rechnergestütztes Verfahren zur Ermittlung der räumlichen Transformation zwischen einem Objekt (3) und einer aus einem Datensatz ableitbaren dreidimensionalen Darstellung des Objektes mit folgenden Schritten:

   a) Erzeugung einer Röntgenaufnahme ($I_r$) von dem in einem Untersuchungsbereich befindlichen Objekt,
   b) Ableitung eines Pseudo-Projektionsbildes ($I_p$), das eine mit definierten Projektionsparametern erzeugte Projektion des Objektes auf einen zweidimensionalen Bereich darstellt, aus dem Datensatz,
   c) Berechnung eines den Grad der Übereinstimmung zwischen der Röntgenaufnahme und dem Pseudo-Projektionsbild kennzeichnenden Ähnlichkeitsmaßes (P),
   d) Wiederholung der Schritte b) und c) mit geänderten Projektionsparametern, bis auf Basis des Ähnlichkeitsmaßes die beste Übereinstimmung erreicht ist,
   e) Bestimmung der räumlichen Transformation unter Verwendung der Projektionsparameter des Pseudo-Projektionsbildes das mit der Röntgenaufnahme am besten übereinstimmt,
   **gekennzeichnet durch** die Schritte
   f) Vorgabe eines Teilvolumens ($CT_p$) des Untersuchungsbereiches vor der Ableitung von Pseudo-Projektionsbildern,
   g) Erzeugung jedes Pseudo-Projektionsbildes ($I_p$) aus einem auf das Teilvolumen beschränkten Teil des Datensatzes,
   h) Ableitung je eines Differenzbildes ($I_d$, $I_{dgi}$, $I_{dgj}$) entweder aus der Röntgenaufnahme ($I_r$) und je einem Pseudo-Projektionsbild ($I_p$) oder aus in gleicher Weise gefilterten Versionen der Röntgenaufnahme ($I_r$) und je eines Pseudo-Projektionsbildes ($I_p$) derart, dass sich gleiche Strukturen in diesen Bildern auslöschen,
   i) Verwendung eines von der Struktur-Vielfalt in wenigsten einem Ausschnitt des Differenzbildes abhängigen Maßes als Ähnlichkeitsmaß.

2. Verfahren nach Anspruch 1,
   **dadurch gekennzeichnet, daß** vor der Ableitung eines Differenzbildes die Bildwerte der Röntgenaufnahme und/oder des Pseudo-Projektionsbildes mit einem Skalierungsfaktor (c) gewichtet werden.

3. Verfahren nach Anspruch 1,
   **dadurch gekennzeichnet, daß** der Datensatz vor der Röntgenaufnahme mit einem Computertomographen (2) erzeugt wird.

4. Verfahren nach Anspruch 3, **dadurch gekennzeichnet, daß** vor der Erzeugung eines Pseudo-Projektionsbildes ein konstanter Wert ($a_0$) von den Voxel-Werten (a) der Voxel des Teilvolumens subtrahiert wird.

5. Verfahren nach Anspruch 1,
   **dadurch gekennzeichnet, daß** zur Bestimmung der Struktur-Vielfalt die Zahl der Pixel im Differenzbild oder emem Ausschnitt davon ermittelt wird, deren Bildwerte sich von den Bildwerten benachbarter Pixel unterscheiden.

6. Verfahren nach Anspruch 5,
   **dadurch gekennzeichnet, daß** zur Berechnung des Ähnlichkeitsmaßes eine die Differenz der Bildwerte ($I_d(i,j)$) von einander benachbarten Pixeln gewichtende Bewertungsfunktion (f(u)) benutzt wird, die bei kleinen Differenzen (u) einen ersten Wert und bei großen Werten einen vom ersten abweichenden zweiten Wert ergibt, und daß die durch die Bewertungsfunktion gewichteten Differenzen summiert werden.

7. Verfahren nach Anspruch 6,
   **dadurch gekennzeichnet, daß** zur Berechnung des Ähnlichkeitsmaßes (P) für jedes Pixel (i,j) nur die Bildwerte von innerhalb eines Kreises um dieses Pixel (i,j) befindlichen Pixeln (i+k,j+l) herangezogen werden.

8. Verfahren nach Anspruch 6,
   **dadurch gekennzeichnet, daß** das Ähnlichkeitsmaß (P) aus den Bildwerten ($I_d(i,j)$) der Pixel (i.j) eines Differenzbildes nach der Beziehung

$$P = \sum_{i,j} \sum_{k,l} \frac{1}{1 + \frac{1}{\sigma^2}(I_d(i,j) \cdot I_d(i+k,j+l))^2}$$

berechnet wird, wobei

- i,j die Pixel zumindest emes Ausschnitts des Differenzbildes sind,
- $I_d(i,j)$ die zugehörigen Bildwerte sind,
- σ ein vorgebbarer Parameter ist und
- k,l ganzzahlige Werte, die der Beziehung

$$r^2 \geq k^2 + l^2$$

genügen, wobei r ein vorgegebener Parameter ist

9. Verfahren nach Anspruch 1, wobei das Differenzbild ($I_{dgi}$, $I_{dgj}$) aus in gleicher Weise gefilterten Versionen ($I_{gri}$, $I_{gpi}$) der Röntgenaufnahme ($I_r$) und des Pseudo-Projektionsbildes ($I_p$) abgeleitet werden, **gekennzeichnet durch,** die Ermittlung des Ähnlichkeitsmaßes in der Weise, daß Pixeln mit einem kleinen Bildwert ein hoher Wert und Pixeln mit einem großen Bildwert ein geringer Wert zugeordnet wird und die auf diese Weise für die Pixel des Differenzbildes erhaltenen Werte summiert werden.

10. Anordnung zur Durchführung des Verfahrens nach Anspruch 1 mit einer ersten bildgebenden Einrichtung (2) zur Erzeugung eines ein Objekt räumlich dreidimensional abbildenden Datensatzes und mit einer Röntgeneinrichtung (12,13) zur Erzeugung von Röntgenaufnahmen des in einem Untersuchungsbereich befindlichen Objektes, mit Mitteln zur Ableitung von Pseudo-Projektionsbildern aus dem Datensatz, mit Mitteln zur Berechnung von den Grad der Übereinstimmung zwischen der Röntgenaufnahme und je emem Pseudo-Projektionsbild kennzeichnenden Ähnlichkeitsmaßen, und mit emer Bildverarbeitungseinheit, die so programmiert ist, daß folgende Bildverarbeitungsoperationen durchgeführt werden:

A) Vorgabe eines Teilvolumens des Untersuchungsbereiches vor der Ableitung von Pseudo-Projektionsbildern.
B) Erzeugung jedes Pseudo-Projektionsbildes aus einem auf das Teilvolumen beschrämkten Teil des Datensatzes,
C) Ableitung je eines Differenzbildes entweder aus der Röntgenaufnahme und je einem Pseudo-Projektionsbild oder aus in gleicher Weise gefilterten Versionen der Röntgenaufnahme und je eines Projektionsbildes, derart, daß sich gleiche Strukturen in diesen Bildern im Differenzbild auslöschen.
D) Verwendung eines von der Struktur-Vielfalt in wenigstens einem Ausschnitt des Differenzbildes abhängigen Maßes als Ähnlichkeitsmaß.

## Claims

1. A computer-aided method of determining the spatial transformation between an object (3) and a three-dimensional representation of the object which can be derived from a data set, the method comprising the following steps:

a) generating an X-ray image ($I_r$) of the object which is situated in an examination zone,
b) deriving from the data set a pseudo-projection image ($I_p$) which represents a projection of the object on a two-dimensional zone with defined projection parameters
c) calculating a similarity measure (P) which characterizes the degree of correspondence between the X-ray image and the pseudo-projection image,
d) repeating the steps b) and c) with varied projection parameters until the best correspondence is obtained on the basis of the similarity measure,

e) determining the spatial transformation while utilizing the projection parameters of the pseudo-projection image which corresponds best with the X-ray image,

**characterized by** the following steps:

f) predefining a sub-volume ($CT_p$) of the examination zone prior to the derivation of pseudo-projection images,

g) generating each pseudo-projection image ($I_p$) from a part of the data set which is limited to the sub-volume,

h) deriving a respective difference image ($I_d$, $I_{dgi}$, $I_{dgj}$) either from the X-ray image ($I_r$) and a respective pseudo-projection image ($I_p$) or from equally filtered versions of the X-ray image ($I_r$) and a respective pseudo-projection Image ($I_p$), in such a manner that corresponding structures in these images cancel each other out in the difference image,

i) using a similarity measure which is a measure dependent on the structuredness in at least a part of the difference image.

2. A method as claimed in claim 1,
**characterized in that** the image values of the X-ray image and/or the pseudo-projection image are weighted by a scaling factor (c) prior to the extraction of a difference image.

3. A method as claimed in claim 1,
**characterized in that** the data set is formed by means of a computer tomograph (2) prior to the X-ray exposure.

4. A method as claimed in claim 3,
**characterized in that** a constant value ($a_0$) is subtracted from the voxel values (a) of the voxels of the sub-volume prior to the formation of a pseudo-projection image.

5. A method as claimed in claim 1,
**characterized in that** the number of pixels in the difference image, or in a part thereof, whose image values deviate from the image values of neighboring pixels is determined so as to determine the structuredness.

6. A method as claimed in claim 5,
**characterized in that** the calculation of the similarity measure utilizes a weighting function (f(u)) which weights the difference between the image values ($I_d(i,j)$) of neighboring pixels and produces a first value in the case of small differences (u) and a second value, which deviates from the first value, in the case of large differences, and **in that** the differences weighted by the weighting function are summed.

7. A method as claimed in claim 6,
**characterized in that** in order to calculate the similarity measure (P), for each pixel (i,j) only the image values of pixels (i+k,j+1) situated within a circle around this pixel (i,j) are taken into account.

8. A method as claimed in claim 6,
**characterized in that** the similarity measure (P) is calculated from the image values ($I_d(i,j)$) of the pixels (i,j) of a difference image in conformity with the relation

$$P = \sum_{i,j} \sum_{k,l} \frac{1}{1 + \frac{1}{\sigma^2}(I_d(i,j) - I_d(i+k, j+l))^2}$$

where

- ij are the pixels of at least a part of the difference image,
- $I_d(i,j)$ are the associated image values,
- $\sigma$ is a predefinable parameter, and
- k,l are integer values which satisfy the relation $r^2 \geq k^2 + l^2$, where r is a predefined parameter.

9. A method as claimed in claim 1, in which the difference image ($I_{dgi}$, $I_{dgj}$) is derived from equally filtered versions ($I_{gri}$, $I_{gpi}$) of the X-ray image ($I_r$) and the pseudo-projection ($I_p$),
**characterized in that** the similarity measure is determined in such a manner that a large value is assigned to pixels having a small image value and a small value is assigned to pixels having a large image value and the values thus obtained for the pixels of the difference image are summed in this manner.

10. A device for carrying out the method as claimed in claim 1, the device comprising a first imaging device (2) for forming a data set which three-dimensionally reproduces an object, and an X-ray device (12, 13) for forming X-ray images of the object located within an examination zone,
means for deriving pseudo-projection images from the data set,
means for calculating similarity measures characterizing the degree of correspondence between the X-ray image and a respective pseudo-projection image,
and an image processing unit which is programmed in such a manner that the following image processing operations are carried out:

A) predefining selecting a sub-volume of the examination zone prior to the generation of pseudo-projection images,
B) generating each pseudo-projection image from a part of the data set which is limited to the sub-volume,
C) deriving a respective difference image either from the X-ray image and a respective pseudo-projection image or from equally filtered versions of the X-ray image and a respective projection image in such a manner that the same structures in these images cancel each other out in the difference image,
D) using a similarity measure which is a measure dependent on the structuredness in at least one part of the difference image.

## Revendications

1. Procédé automatique assisté par ordinateur de détermination de la transformation spatiale entre un objet (3) et une représentation tridimensionnelle de l'objet à déduire d'une série de données, comprenant les étapes suivantes:

a) production d'un cliché radiographique ($I_r$) de l'objet se trouvant dans une zone d'examen;
b) dérivation d'une image de pseudoprojection ($I_p$) qui représente une projection de l'objet, produite avec des paramètres de projection définis, sur une zone bidimensionnelle à partir du jeu de données,
c) calcul d'une mesure de similitude (P) caractérisant le degré de concordance entre le cliché radiographique et l'image de pseudoprojection,
d) répétition des étapes b) et c) avec des paramètres de projection modifiés jusqu'à ce que la meilleure concordance soit atteinte en fonction de la mesure de similitude,
e) détermination de la transformation spatiale en utilisant les paramètres de projection de l'image de pseudo-projection qui correspond le mieux au cliché radiographique
**caractérisé par** les étapes suivantes
f) détermination préalable, manuelle ou automatique, d'un volume partiel ($CT_p$) de la zone d'examen avant la déduction d'images de pseudoprojection;
g) production de chaque image de pseudoprojection ($I_p$) à partir d'une partie de la série de données limitée au volume partiel;
h) déduction d'une image différentielle respective ($I_d$, $I_{dgi}$, $I_{dgj}$), soit du cliché radiographique ($I_r$) et d'une image de pseudoprojection ($I_p$) respective, soit de versions filtrées de la même manière du cliché radiographique ($I_r$) et d'une image de pseudoprojection ($I_p$) respective de telle sorte que les mêmes structures dans ces images s'effacent dans l'image différentielle;
i) mise en oeuvre d'une mesure dépendant de la diversité structurelle dans au moins un extrait de l'image différentielle comme mesure de la similitude.

2. Procédé selon la revendication 1, **caractérisé en ce que** les valeurs d'image du cliché radiographique et/ou de l'image de pseudoprojection avec un facteur de cadrage (c) sont pondérées avant la déduction d'une image différentielle.

3. Procédé selon la revendication 1, **caractérisé en ce que** la série de données est produite avant le cliché radiographique avec un tomographe informatisé (2).

4. Procédé selon la revendication 3, **caractérisé en ce qu'**avant la production d'une image de pseudoprojection, une valeur constante ($a_0$) est soustraite des valeurs de voxel (a) des voxels du volume partiel.

5. Procédé selon la revendication 1, **caractérisé en ce que**, pour la détermination de la diversité structurelle, on détermine le nombre de pixels dans l'image différentielle ou dans un extrait de celle-ci dont les valeurs d'image diffèrent des pixels voisins des valeurs d'image.

**6.** Procédé selon la revendication 5, **caractérisé en ce que**, pour le calcul de la mesure de similitude, une fonction d'évaluation (f(u)) pondérant la différence des valeurs d'image (Id(i,j)) de pixels voisins l'un de l'autre est utilisée et détermine une première valeur en cas de différences minimes (u) et une deuxième valeur différant de la première en cas de valeurs élevées et que les différences pondérées par la fonction d'évaluation sont additionnées.

**7.** Procédé selon la revendication 6, **caractérisé en ce que** seules les valeurs d'image de pixels (i+k,j+l) se trouvant dans un cercle autour de ce pixel (i, j) sont utilisées pour le calcul de la mesure de similitude (P) pour chaque pixel (i, j).

**8.** Procédé selon la revendication 6, **caractérisé en ce que** la mesure de similitude (P) est calculée à partir des valeurs d'image ($I_d$(i,j)) des pixels (I,j) d'une image différentielle selon l'équation:

$$p = \sum_{i,j}\sum_{k,l} \frac{1}{1+\frac{1}{\sigma^2}(I_d(i,j)-I_d(i+k,j+1))^2}$$

dans laquelle

- i, j sont les pixels d'au moins un extrait de l'image différentielle,
- $i_d$(i,j) sont les valeurs d'image correspondantes,
- σ est un paramètre à déterminer préalablement et
- k, l sont des valeurs entières qui répondent à l'équation $r^2 \geq k^2+l^2$ dans laquelle r est un paramètre à déterminer préalablement.

**9.** Procédé selon la revendication 1, l'image différentielle ($I_{dgi}$, $I_{dgj}$) étant dérivée de versions filtrées de la même manière ($I_{gri}$, $I_{gpj}$) du cliché radiographique ($I_r$) et de l'image de pseudoprojection ($I_p$),
**caractérisé par** la détermination de la mesure de similitude de telle manière qu'une valeur élevée soit attribuée aux pixels avec une faible valeur d'image et une faible valeur aux pixels avec une valeur d'image élevée et les valeurs obtenues de cette manière pour les pixels de l'image différentielle sont additionnées.

**10.** Dispositif de mise en oeuvre du procédé selon la revendication 1 est doté d'un premier dispositif (2) d'imagerie en vue de la production d'une série de données représentant un objet tridimensionnellement dans l'espace et avec un dispositif radiographique (12, 13) pour la production de clichés radiographiques de l'objet se trouvant dans une zone d'examen, avec des moyens pour la déduction d'images de pseudoprojection à partir de la série de données, avec des moyens pour le calcul du degré de concordance entre le cliché radiographique et respectivement une mesure de similitudes caractérisant une image de pseudoprojection et avec une unité de traitement de l'image qui est programmée de telle sorte que les opérations suivantes de traitement de l'image soient effectuées:

A) détermination préalable d'un volume partiel de la zone d'examen avant la déduction d'images de pseudo-projection;
B) production de chaque image de pseudoprojection à partir d'une partie de la série de données limitée au volume partiel;
C) déduction d'une image différentielle respective soit du cliché radiographique et d'une image de pseudo-projection respective, soit de versions filtrées de la même manière de clichés radiographiques et d'une image de pseudoprojection respective de telle sorte que les mêmes structures dans ces images s'effacent dans l'image différentielle;
D) mise en oeuvre d'une mesure dépendant de la diversité structurelle dans au moins un extrait de l'image différentielle comme mesure de la similitude.

FIG. 1

FIG. 2

FIG. 4

FIG. 3